# EUROPÄISCHE PATENTSCHRIFT

(11) **EP 4 355 622 B1**
(45) Veröffentlichungstag und Bekanntmachung des Hinweises auf die Patenterteilung: **18.12.2024**
(21) Anmeldenummer: 22722445.8
(22) Anmeldetag: 12.04.2022
(51) Int. Cl.: B60T 7/04

(54) **HYDRAULIKBLOCK FÜR EIN BREMSAGGREGAT EINER HYDRAULISCHEN FREMDKRAFTBREMSANLAGE**
HYDRAULIC BLOCK FOR BRAKE ASSEMBLY OF A HYDRAULIC INDEPENDENT POWER BRAKE SYSTEM
BLOQUE HYDRAULIQUE POUR UN GROUPE DE FREIN D'UN SYSTÈME DE FREINAGE À PUISSANCE INDÉPENDANTE

(30) Priorität: 15.06.2021 DE 102021206074
(43) Veröffentlichungstag der Anmeldung: 24.04.2024
(73) Patentinhaber: Robert Bosch GmbH, 70442 Stuttgart (DE)
(72) Erfinder: MAYR, Matthias, 87549 Rettenberg (DE); KASERER, Stefan, 87527 Ofterschwang (DE); WEH, Andreas, 87477 Sulzberg (DE)
(86) Internationale Anmeldenummer: PCT/EP2022/059685
(87) Internationale Veröffentlichungsnummer: WO 2022/263041

(56) Entgegenhaltungen:
- EP-A1- 2 883 766
- DE-A1- 102012 213 216
- DE-A1- 102014 213 732
- DE-A1- 102019 203 308
- KR-A- 20190 090 637
- US-A1- 2012 177 516
- US-A1- 2019 031 164
- US-A1- 2020 282 968

## Beschreibung

Die Erfindung betrifft einen Hydraulikblock für ein Bremsaggregat einer hydraulischen Fremdkraftbremsanlage für einen Kraftwagen mit den Merkmalen des Oberbegriffs des Anspruchs 1.

### Stand der Technik

Ein Hydraulikblock, der die Merkmale des Oberbegriffs des Anspruchs 1 aufweist, ist beispielsweise aus der US 2020/282968 A1 bereits bekannt. Von diesem Hydraulikblock unterscheidet sich die Erfindung dadurch, dass die Fremdkraftzylinderbohrung und die Simulatorzylinderbohrung zwischen der Oberseite und der Hauptbremszylinderbohrung im Hydraulikblock angebracht sind und dass eine zweite Rückleitung in dem Hydraulikblock von einer Aufnahme für ein Auslassventil durch die Simulatorzylinderbohrung zu einem der Anschlüsse für den Bremsflüssigkeitsbehälter führt. Wie nachfolgend dargelegt, wird mit der Erfindung eine Vereinfachung der Verbohrung eines Hydraulikblocks erreicht.

Abgesehen davon erläutert die Offenlegungsschrift DE 10 2016 202 113 A1 einen schmalen, quaderförmigen Hydraulikblock für ein Hydraulikaggregat einer schlupfgeregelten, hydraulischen Fremdkraftbremsanlage mit drei Anschlüssen für einen Bremsflüssigkeitsvorratsbehälter in einer Oberseite des Hydraulikblocks. Unterhalb der Anschlüsse durchsetzt eine Hauptbremszylinderbohrung den Hydraulikblock parallel zu der Oberseite durchgehend von einer zu einer gegenüberliegenden, an die Oberseite angrenzenden Schmalseite. Unterhalb der Hauptbremszylinderbohrung durchsetzt eine Fremdkraftzylinderbohrung den Hydraulikblock quer zu der Hauptbremszylinderbohrung von einer zu einer gegenüberliegenden großen Seite des Hydraulikblocks, die an die Oberseite und an die beiden Schmalseiten des Hydraulikblocks angrenzen. Zur Erzeugung eines Bremsdrucks mit Fremdkraft ist ein Fremdkraftkolben mit einem Elektromotor über einen Kugelgewindetrieb in der Fremdkraftzylinderbohrung verschiebbar. Der Elektromotor ist koaxial zur Fremdkraftzylinderbohrung außen am Hydraulikblock angeordnet und der Kugelgewindetrieb befindet sich - ebenfalls koaxial zum Elektromotor und zur Fremdkraftzylinderbohrung - zwischen dem Elektromotor und dem Fremdkraftkolben. Der Elektromotor und der Kugelgewindetrieb bilden einen Fremdkraftantrieb und zusammen mit dem Fremdkraftkolben und der Fremdkraftzylinderbohrung einen Fremdkraft-Bremsdruckerzeuger für die hydraulische Fahrzeugbremsanlage. Anschlüsse für hydraulische Radbremsen durch Bremsleitungen sind nahe der Oberseite in Höhe der Anschlüsse für den Bremsflüssigkeitsvorratsbehälter in einer der beiden großen Seiten des Hydraulikblocks angebracht. Eine Simulatorzylinderbohrung für einen Pedalwegsimulator der Fremdkraft-Bremsanlage ist in einer der Oberseite gegenüberliegenden Unterseite des bekannten Hydraulikblocks angebracht.

### Offenbarung der Erfindung

Der erfindungsgemäße Hydraulikblock mit den Merkmalen des Anspruchs 1 ist für ein Bremsaggregat einer hydraulischen, eine Bremsdruckregelung aufweisenden Fremdkraftbremsanlage für einen Kraftwagen vorgesehen. Bremsdruckregelung bedeutet die Erzeugung und Regelung eines Bremsdrucks in der Fahrzeugbremsanlage, in Bremskreisen der Fahrzeugbremsanlage und/oder in an den Hydraulikblock angeschlossenen hydraulischen Radbremsen der Bremsanlage. Die Bremsdruckregelung kann insbesondere auch eine Schlupfregelung umfassen. Schlupfregelungen sind beispielsweise Blockierschutz-, Antriebsschlupf- und/oder Fahrdynamikregelungen, für die die Abkürzungen ABS, ASR und/oder FDR gebräuchlich sind. Schlupfregelungen sind bekannt und werden hier nicht erläutert.

Der Hydraulikblock dient einer mechanischen Befestigung und hydraulischen Verschaltung hydraulischer Bauelemente der Fahrzeugbremsanlage, der Bremsdruckerzeugung und/oder der Bremsdruckregelung und/oder der Schlupfregelung. Solche hydraulische Bauelemente sind unter anderem Magnetventile, Rückschlagventile, Hydrospeicher, Dämpferkammern und Drucksensoren. Die hydraulischen Bauelemente sind in Aufnahmen im Hydraulikblock befestigt, die meist als zylindrische Senkungen, Sacklöcher oder Durchgangslöcher, teilweise mit Durchmesserstufungen, ausgebildet sind. "Verschaltet" bedeutet, dass die Aufnahmen bzw. die in ihnen befestigten hydraulischen Bauelemente durch Leitungen im Hydraulikblock entsprechend einem hydraulischen Schaltplan der Fahrzeugbremsanlage verbunden sind. Die Leitungen sind typischerweise jedoch nicht zwingend im Hydraulikblock gebohrt.

Bestückt mit den hydraulischen Bauelementen der Fahrzeugbremsanlage bzw. ihrer Schlupfregelung bildet der Hydraulikblock das Bremsaggregat, wobei "bestückt" bedeutet, dass die hydraulischen Bauelemente in den für sie jeweils vorgesehenen Aufnahmen des Hydraulikblocks befestigt sind.

Die Erfindung ist insbesondere auf eine Verbohrung des Hydraulikblocks gerichtet, das heißt auf eine Führung von Leitungen zwischen den hydraulischen Bauelementen beziehungsweise ihren Aufnahmen im Hydraulikblock.

Der erfindungsgemäße Hydraulikblock weist eine Oberseite auf, die zu einem Aufsetzen eines Bremsflüssigkeitsvorratsbehälters vorgesehen ist. In der Oberseite weist der Hydraulikblock einen oder mehrere Anschlüsse für den Bremsflüssigkeitsvorratsbehälter auf.

Eine an die Oberseite des Hydraulikblocks angrenzende Befestigungsseite des Hydraulikblocks ist zu einer Befestigung des Hydraulikblocks beziehungsweise des Bremsaggregats, das heißt des mit den hydraulischen Bauelementen der Fahrzeugbremsanlage bestückten Hydraulikblocks, an einer Spritzwand eines Kraftwagens ausgebildet. Zu diesem Zweck weist der Hydraulikblock an der Befestigungsseite beispielsweise zwei standardisierte Innengewindelöcher auf, in die Stiftschrauben oder Stehbolzen zur Befestigung des Hydraulikblocks beziehungsweise des Bremsaggregats an der Spritzwand des Kraftwagens einschraubbar sind. Eine Hauptbremszylinderbohrung mündet an der Befestigungsseite des Hydraulikblocks, so dass ein Hauptbremszylinderkolben mit Muskelkraft über ein dem Hydraulikblock gegenüber an der Spritzwand des Kraftwagens angebrachtes Bremspedal und über eine Pedalstange, die das Bremspedal gelenkig mit dem Hauptbremszylinderkolben verbindet, in der Hauptbremszylinderbohrung verschiebbar ist. Vorzugsweise verläuft die Hauptbremszylinderbohrung parallel zur Oberseite in dem Hydraulikblock.

Eine Fremdkraftzylinderbohrung zur Erzeugung eines Bremsdrucks mit Fremdkraft ist quer zu der Hauptbremszylinderbohrung zwischen der Oberseite des Hydraulikblocks und der Hauptbremszylinderbohrung in dem Hydraulikblock angebracht. Die Hauptbremszylinderbohrung befindet sich also unterhalb der Fremdkraftzylinderbohrung, das heißt die Hauptbremszylinderbohrung befindet sich auf einer der Oberseite des Hydraulikblocks abgewandten Seite der Fremdkraftzylinderbohrung beziehungsweise zwischen der Fremdkraftzylinderbohrung und einer der Oberseite gegenüberliegenden Unterseite des Hydraulikblocks. Die Fremdkraftzylinderbohrung mündet an einer an die Oberseite und an die Befestigungsseite angrenzenden Motorseite des Hydraulikblocks, die zu einer Befestigung eines Elektromotors zum Antrieb eines Fremdkraft-Bremsdruckerzeugers vorgesehen ist.

Eine Simulatorzylinderbohrung für einen Pedalwegsimulator ist ebenfalls quer zu der Hauptbremszylinderbohrung zwischen der Oberseite des Hydraulikblocks und der Hauptbremszylinderbohrung, also oberhalb der Hauptbremszylinderbohrung in dem Hydraulikblock angebracht. Sie mündet vorzugsweise an einer der Motorseite gegenüberliegenden Ventilseite des Hydraulikblocks, die wie die Motorseite an die Oberseite und an die Befestigungsseite angrenzt.

Erfindungsgemäß führt eine zweite Rückleitung in dem Hydraulikblock von einer Aufnahme für ein Auslassventil der Fahrzeugbremsanlage durch die Simulatorzylinderbohrung zu einem der Anschlüsse für den Bremsflüssigkeitsbehälter. Die Rückleitung ist eine durch Bohren oder in anderer Weise hergestellte Leitung für Bremsflüssigkeit im Hydraulikblock. Vorzugsweise führt die zweite Rückleitung von der Aufnahme für das Auslassventil zur Simulatorzylinderbohrung und von der Simulatorzylinderbohrung schräg zur Motorseite zu dem Anschluss für den Bremsflüssigkeitsbehälter in der Oberseite des Hydraulikblocks. Außerdem kann die zweite Rückleitung zum Hauptbremszylinder führen.

Die zweite Rückleitung ist so im Hydraulikblock angeordnet, dass sie auf einer Rückseite eines Simulatorkolbens in die Simulatorzylinderbohrung mündet. Der Simulatorkolben trennt die Simulatorzylinderbohrung in eine druckbeaufschlagbare Arbeitskammer auf einer Vorderseite des Simulatorkolbens, die durch ein Simulatorventil an den Hauptbremszylinder angeschlossen ist, und in eine drucklose Kammer auf der Rückseite des Simulatorkolbens, die mit dem drucklosen Bremsflüssigkeitsbehälter kommuniziert. Die zweite Rückleitung führt erfindungsgemäß durch die drucklose Kammer der Simulatorzylinderbohrung.

Eine erste Rückleitung führt gemäß einer Ausgestaltung der Erfindung in dem Hydraulikblock von einer Aufnahme für ein Auslassventil zu der Fremdkraftzylinderbohrung und von der Fremdkraftzylinderbohrung zu einem der Anschlüsse für den Bremsflüssigkeitsbehälter. Die beiden Rückleitungen verbinden vorzugsweise verschiedene Aufnahmen für Auslassventile mit verschiedenen Anschlüssen für den Bremsflüssigkeitsbehälter. Die erste Rückleitung lässt sich unabhängig von der oben beschriebenen Führung der zweiten Rückleitung verwirklichen.

Hier als "Leitungen" oder "Bohrungen" beziehungsweise als "Zylinderbohrungen" bezeichnete Durchgangs- oder Sacklöcher im Hydraulikblock können auch anders als durch Bohren hergestellt sein.

Die abhängigen Ansprüche haben Weiterbildungen und vorteilhafte Ausgestaltungen der im unabhängigen Anspruch angegebenen Erfindung zum Gegenstand.

Sämtliche in der Beschreibung und der Zeichnung offenbarten Merkmale können einzeln für sich oder in grundsätzlich beliebiger Kombination bei Ausführungsformen der Erfindung verwirklicht sein. Ausführungen der Erfindung, die nicht alle, sondern nur ein oder mehrere Merkmale eines Anspruchs oder einer Ausführungsform der Erfindung aufweisen, sind grundsätzlich möglich. Möglich sind beispielsweise auch Ausführungen der Erfindung, bei denen die Anschlüsse für das Hilfsbremsaggregat an anderer Stelle als im Kennzeichen des Anspruchs 1 angeordnet sind.

### Kurze Beschreibung der Zeichnung

Die Erfindung wird nachfolgend anhand einer in der Zeichnung dargestellten Ausführungsform näher erläutert. Es zeigen:
- Figur 1: einen Hydraulikschaltplan einer elektrohydraulischen Fremdkraftbremsanlage;
- Figur 2: eine Motorseite eines erfindungsgemäßen Hydraulikblocks eines Bremsaggregats der Fahrzeugbremsanlage aus Figur 1;
- Figur 3: eine der Motorseite gegenüberliegenden Ventilseite des Hydraulikblocks aus Figur 2;
- Figur 3a: einen Schnitt des Hydraulikblocks entlang der abgewinkelten Schnittlinie A-A in Figur 3;
- Figur 3b: einen Schnitt des Hydraulikblocks entlang Linie B-B in Figur 3; und
- Figur 4: einen Teil einer Verbohrung des Hydraulikblocks aus Figuren 2 und 3.

Die Zeichnungen sind teilweise vereinfachte Darstellungen mit teilweise verschiedenen Maßstäben.

### Ausführungsform der Erfindung

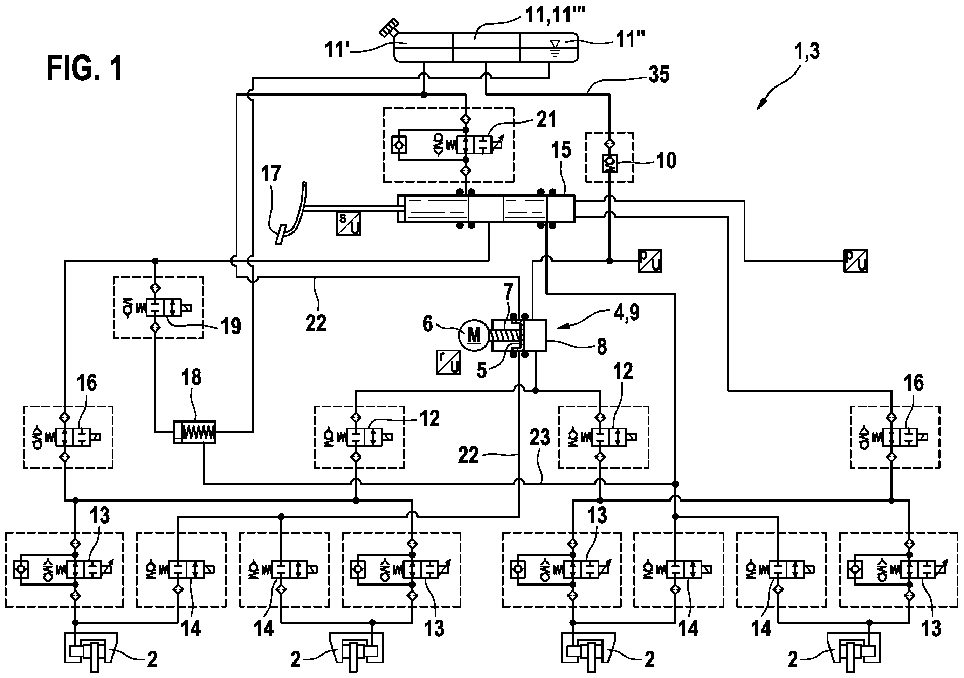

Die in Figur 1 dargestellte elektrohydraulische Fremdkraftbremsanlage 1 ist für Personenkraftwagen mit vier Radbremsen 2 vorgesehen. Sie weist ein Bremsaggregat 3 auf, an das die vier Radbremsen 2 über Bremsleitungen angeschlossen sind. Die Fahrzeugbremsanlage 1 ist als Zweikreis-Bremsanlage ausgeführt, es sind jeweils zwei Radbremsen 2 an einen Bremskreis angeschlossen.

Für eine Fremdkraftbremsung weist die Bremsanlage 3 eine Kolben-Zylinder-Einheit 4 auf, deren Kolben 5 mit einem Elektromotor 6 über einen Gewindetrieb 7 als Rotations-/Translations-Wandelgetriebe in einem Zylinder 8 verschiebbar ist. Der Elektromotor 6, der Gewindetrieb 7 und die Kolben-Zylinder-Einheit 4 bilden einen Fremdkraft-Bremsdruckerzeuger 9 des Bremsaggregats 3 zur Erzeugung eines Bremsdrucks für eine Bremsung mit Fremdkraft. Die Fremdkraftbremsung, für die ein Bremsdruck mit dem Fremdkraft-Bremsdruckerzeuger 9 erzeugt wird, ist die übliche und vorgesehene Bremsbetätigung, das heißt eine Betriebsbremsung.

Durch ein Rückschlagventil 10 ist der Fremdkraft-Bremsdruckerzeuger 9, das heißt der Zylinder 8 der Kolben-Zylinder-Einheit 4 des Fremdkraft-Bremsdruckerzeugers 9 an eine Kammer 11‴ eines Bremsflüssigkeitsbehälters 11 und über in jedem Bremskreis ein Betriebsbremsventil 12, die einander hydraulisch parallel geschaltet sind, sind die Radbremsen 2 an den Zylinder 8 der Kolben-Zylinder-Einheit 4 des Fremdkraft-Bremsdruckerzeugers 9 angeschlossen.

Die Bremsanlage 1 weist für jede Radbremse 2 ein Einlassventil 13 und ein Auslassventil 14 auf, mit denen Radbremsdrücke in jeder Radbremse 2 einzeln regelbar sind. Dadurch sind die Radbremsdrücke in den Radbremsen 2 und damit Bremskräfte der Radbremsen 2 im normalen Fahrbetrieb ohne Schlupf regelbar. Außerdem sind Schlupfregelungen wie Blockierschutz- und Antriebsschlupfregelung, Fahrdynamikregelungen, die umgangssprachlich auch als Schleuderschutzregelungen bezeichnet werden, automatische Bremsungen, Abstandsregelungen und dergleichen mehr möglich. Solche Regelungen sind bekannt und werden hier nicht näher erläutert. Die Einlassventile 13 und die Auslassventile 14 können auch als Radbremsdruckregelventilanordnungen 13, 14 aufgefasst werden. In jedem Bremskreis sind zwei Einlassventile 13 hydraulisch parallel durch ein Betriebsbremsventil 12 an den Fremdkraft-Bremsdruckerzeuger 9 angeschlossen.

Außer dem Fremdkraft-Bremsdruckerzeuger 9 weist die Bremsanlage 1 einen muskelkraftbetätigbaren Zweikreis-Hauptbremszylinder 15 auf, an den die Radbremsen 2 in jedem Bremskreis durch ein Trennventil 16 und zwei Einlassventile 13 angeschlossen sind. Der Hauptbremszylinder 15 dient als Sollwertgeber für die in den Radbremsen 2 einzustellenden Radbremsdrücke. Der Bremsdruck wird bei einer Fremdkraftbremsung mit dem Fremdkraft-Bremsdruckerzeuger 9 erzeugt. Der Hauptbremszylinder 15 wird bei der Fremdkraftbremsung durch Schließen der Trennventile 16 hydraulisch von den Radbremsen 2 getrennt. Bei einem Ausfall des Fremdkraft-Bremsdruckerzeugers 9 wird der Bremsdruck durch Betätigung des Hauptbremszylinders 15 mit Muskelkraft erzeugt (sogenannte Hilfsbremsung).

Damit bei geschlossenen Trennventilen 16 Bremsflüssigkeit aus dem Hauptbremszylinder 15 verdrängt und Kolben des Hauptbremszylinders 15 und ein Bremspedal 17 bewegt werden können, weist das Bremsaggregat 3 einen Pedalwegsimulator 18 auf, der in einem Bremskreis über ein Simulatorventil 19 an den Hauptbremszylinder 15 angeschlossen ist. Der Pedalwegsimulator 18 ist eine Kolben-Zylinder-Einheit mit einem federbeaufschlagten Kolben.

In der beschriebenen und dargestellten Ausführungsform der Erfindung sind die die Einlassventile 13 und die Trennventile 16 in ihren stromlosen Grundstellungen offene 2/2-Wege-Magnetventile und die Betriebsbremsventile 12 des Fremdkraft-Bremsdruckerzeugers 9, die Auslassventile 14 und das Simulatorventil 19 in ihren stromlosen Grundstellungen geschlossene 2/2-Wege-Magnetventile.

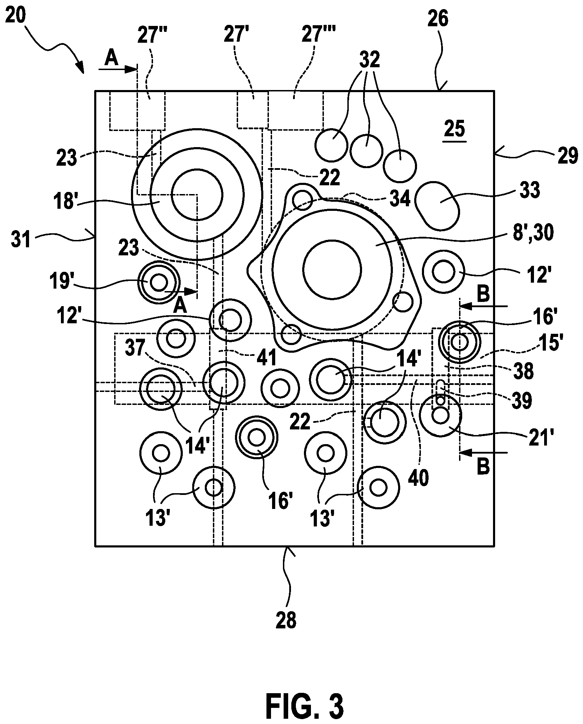

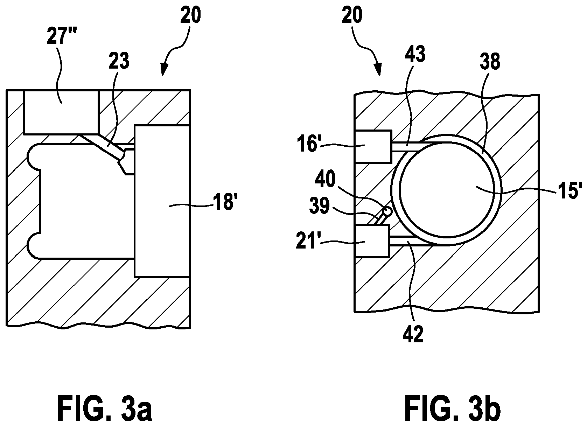

Die hydraulischen Bauelemente der elektrohydraulischen Fremdkraftbremsanlage 1, nämlich die Ventile 12, 13, 14, 16, 19, 21 der Fremdkraft-Bremsdruckerzeuger 9, der Hauptbremszylinder 15, der Pedalwegsimulator 18 und weitere Bauelemente wie Drucksensoren, sind in Aufnahmen eines Hydraulikblocks 20 des Bremsaggregats 3 angeordnet und durch eine Verbohrung des Hydraulikblocks 20 entsprechend dem in Figur 1 dargestellten hydraulischen Schaltplan der Fahrzeugbremsanlage 1 miteinander verbunden. Eine Aufnahme 21' für das Testventil 21 kommuniziert durch eine Bohrung 42, die axial von einem Grund der Aufnahme 21' zu einer die Hauptbremszylinderbohrung 15' umschließenden Nut 38 führt, mit der Hauptbremszylinderbohrung 15' (Figur 3b). Die Nut 38 und die in sie mündende Bohrung 42 sind in Figur 3b in die Schnittebene versetzt gezeichnet. Tatsächlich befinden sie sich mit Blick auf die Befestigungsseite 29 des Hydraulikblocks 20 hinter der Bohrung 42 und der Schrägbohrung 39.

Außerdem führt vom Grund der Aufnahme 21' für das Testventil 21 eine Schrägbohrung 39 zu einer Horizontalbohrung 40, die parallel zur Hauptbremszylinderbohrung 15' zwischen der Hauptbremszylinderbohrung 15' und der Ventilseite zu der ersten Rückleitung 22 führt, wodurch die Aufnahme 21' für das Testventil 21 mit einem der Anschlüsse 27' für den Bremsflüssigkeitsbehälter 11 verbunden ist (Figur 3b).

In einem der beiden Bremskreise ist der Hauptbremszylinder 15 durch ein Testventil 21 an eine der Kammern 11' des Bremsflüssigkeitsvorratsbehälters 11 angeschlossen. Das Testventil 21 ist im Ausführungsbeispiel ebenfalls ein in seiner stromlosen Grundstellung offenes 2/2-Wege-Magnetventil. Im anderen Bremskreis ist der Hauptbremszylinder 15 an eine Rückseite des Pedalwegsimulators 19 angeschlossen, die ihrerseits an eine Kammer 11" des Bremsflüssigkeitsbehälters 11 angeschlossen und dadurch drucklos ist. Als Rückseite des Pedalwegsimulators 19 wird eine von zwei Kammern des Zylinders des Pedalwegsimulators 19 bezeichnet, in die der Kolben des Pedalwegsimulators 19 den Zylinder des Pedalwegsimulators 19 teilt. Eine Vorderseite des Pedalwegsimulators 19 ist durch das Simulatorventil 19 an den Hauptbremszylinder 15 angeschlossen und wird bei offenem Simulatorventil 19 vom Hauptbremszylinder 15 mit Druck beaufschlagt.

In einem Bremskreis sind die Auslassventile 14 durch eine erste Rückleitung 22, die im Zylinder 8 der Kolben-Zylinder-Einheit 4 des Fremdkraft-Bremsdruckerzeugers 9 um den Kolben 5 der Kolben-Zylinder-Einheit 4 herum führt, an eine Kammer 11' des Bremsflüssigkeitsbehälters 11 angeschlossen. Im anderen Bremskreis sind die Auslassventile 14 durch eine zweite Rückleitung 23 zusammen mit dem Hauptbremszylinder 15 an eine andere Kammer 11" des Bremsflüssigkeitsbehälters 11 angeschlossen.

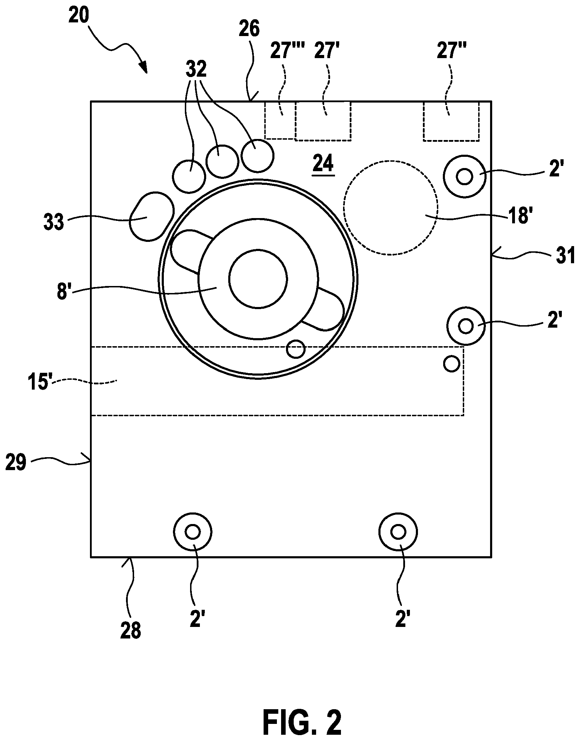

Figur 2 zeigt eine Motorseite 24 und Figur 3 eine Ventilseite 25 des Hydraulikblocks 20 des Bremsaggregats 3. Der Hydraulikblock 20 ist im Ausführungsbeispiel ein flacher, quaderförmiger Metallblock, der einer mechanischen Befestigung und hydraulischen Verschaltung der hydraulischen Bauelemente der Fremdkraftbremsanlage 1 dient. Bestückt mit den hydraulischen Bauelementen bildet der Hydraulikblock 20 das Bremsaggregat 3 der Fahrzeugbremsanlage 1. "Flach" bedeutet, dass der Hydraulikblock 20 ungefähr drei bis vier mal so breit oder lang wie dick ist. Zwei gegenüberliegende große Seiten des Hydraulikblocks 20 sind im Ausführungsbeispiel nahezu quadratisch und bilden die Motorseite 24 und Ventilseite 25. In Figuren 2 und 3 ist der Hydraulikblock 20 unbestückt gezeichnet, das heißt ohne die hydraulischen Bauelemente.

Eine Schmalseite des Hydraulikblocks 20, die hier als Oberseite 26 bezeichnet wird, weist drei zylindrische Sacklöcher als Anschlüsse 27', 27", 27‴ für die Kammern 11', 11", 11‴ des Bremsflüssigkeitsbehälters 11 auf, der auf der Oberseite 26 des Hydraulikblocks 20 angeordnet wird (nicht dargestellt). Dabei gelangen Anschlussnippel an einem Boden des Bremsflüssigkeitsvorratsbehälters 11 in die die Anschlüsse 27', 27", 27‴ bildenden Sacklöcher des Hydraulikblocks 20 und sind dort mit O-Ringen abgedichtet.

In dem Hydraulikblock 20 ist eine Hauptbremszylinderbohrung 15', die den Hauptbremszylinder 15 bildet, parallel zur Oberseite 26 und in einer Mitte zwischen der Motorseite 24 und der Ventilseite 25 angebracht. In Figuren 2 und 3 ist die Hauptbremszylinderbohrung 15' mit Strichlinien dargestellt. Sie befindet sich im Ausführungsbeispiel etwas unterhalb einer Mitte des Hydraulikblocks 20 zwischen der Oberseite 26 und einer gegenüberliegenden Unterseite 28 des Hydraulikblocks 20, so dass die Hauptbremszylinderbohrung 15' etwa tangential an einer Mittelebene des Hydraulikblocks 20 zwischen der Oberseite 26 und der Unterseite 28 anliegt.

Die Hauptbremszylinderbohrung 15' ist an einer Schmalseite des Hydraulikblocks 20 offen, sie mündet an dieser Schmalseite des Hydraulikblocks 20 beziehungsweise weist dort eine Mündung auf. Die Schmalseite des Hydraulikblocks 20, an der die Hauptbremszylinderbohrung 15' offen ist beziehungsweise mündet, wird hier als Befestigungsseite 29 des Hydraulikblocks 20 bezeichnet. Sie grenzt an die Oberseite 26, die Motorseite 24, die Ventilseite 25 und an die Unterseite 28 des Hydraulikblocks 20 und ist zu einer Befestigung des Hydraulikblocks 20 an einer nicht dargestellten Spritzwand des Kraftwagens vorgesehen. Der Hydraulikblock 20 wird so an der Spritzwand des Kraftwagens befestigt, dass sich die Oberseite 26 mit dem Bremsflüssigkeitsbehälter 11 oben befindet. Die Hauptbremszylinderbohrung 15' ist an der Befestigungsseite 29 des Hydraulikblocks 20 offen, so dass ein Hauptbremszylinderkolben mittels des Fußbremspedals 17, das an einer gegenüberliegenden Seite der Spritzwand befestigt wird, über eine Pedalstange, die den Hauptbremszylinderkolben gelenkig mit dem Fußbremspedal 17 verbindet, in der Hauptbremszylinderbohrung 15' verschiebbar ist. Das Fußbremspedal 17 und die Pedalstange sind in Figuren 2 und 3 nicht gezeichnet.

Eine Fremdkraftzylinderbohrung 8', die den Zylinder 8 des Fremdkraft-Bremsdruckerzeugers 9 bildet, ist senkrecht zu der Hauptbremszylinderbohrung 15' in der Motorseite 24 des Hydraulikblocks 20 angebracht und steht auf der Ventilseite 25 als eine Art Dom 30 über. Die Fremdkraftzylinderbohrung 8' befindet sich etwas oberhalb der Hauptbremszylinderbohrung 15', das heißt zwischen der Hauptbremszylinderbohrung 15' und der Oberseite 26 des Hydraulikblocks 20. Die Fremdkraftzylinderbohrung 8' geht in geringem Abstand rechtwinklig an der Hauptbremszylinderbohrung 15' vorbei. Sie ist etwas außermittig in Richtung der Befestigungsseite 29 des Hydraulikblocks 20 versetzt angeordnet.

Der Elektromotor 6 des Fremdkraft-Bremsdruckerzeugers 9, der in Figur 2 nicht gezeichnet ist, wird koaxial zu der Fremdkraftzylinderbohrung 8' außen an der Motorseite 24 des Hydraulikblocks 20 angeordnet. Ein Planetengetriebe als Untersetzungsgetriebe und der Gewindetrieb 7, der im Ausführungsbeispiel ein Kugelgewindetrieb ist, werden koaxial zu der Fremdkraftzylinderbohrung 8' zwischen zum Elektromotor 6 und dem Kolben 5 des Fremdkraft-Bremsdruckerzeugers 9 angeordnet (in Figur 2 nicht gezeichnet)

In der Ventilseite 25 des Hydraulikblocks 20 ist parallel zu der Fremdkraftzylinderbohrung 8' und senkrecht zu der Hauptbremszylinderbohrung 15' eine Zylinderbohrung 18' des Pedalwegsimulators 18 angebracht. Die Zylinderbohrung 18' befindet sich im Ausführungsbeispiel zwischen der Hauptbremszylinderbohrung 15' und der Oberseite 26 des Hydraulikblocks 20 und näher an der Oberseite 26 als an der Hauptbremszylinderbohrung 15' und zwischen der Fremdkraftzylinderbohrung 8' und einer der Befestigungsseite 29 gegenüberliegenden Schmalseite 31 des Hydraulikblocks 20.

Aufnahmen 12', 13', 14', 16', 19', 21' für die Magnetventile 12, 13, 14, 16, 19, 21 und Aufnahmen für weitere Bauelemente wie Drucksensoren sind in der Ventilseite 25 des Hydraulikblocks 20 angebracht. Die Aufnahmen, die in Figur 3 mit der Bezugszahl des jeweiligen Magnetventils 12, 13, 14, 16, 19, 21 oder sonstigen Bauelements ergänzt um einen "'" bezeichnet sind, sind zylindrische, teilweise durchmessergestufte Senkungen oder Sacklöcher im Hydraulikblock 20. Die hydraulischen Bauelemente sind in die Aufnahmen eingesetzt und umlaufend druckdicht verstemmt. Von den Magnetventilen 12, 13, 14, 16, 19, 21 befinden sich hydraulische, die eigentlichen Ventile bildende Abschnitte in den Aufnahmen, Anker und Magnetspulen, die in einem Ventildom untergebracht sind, stehen von der Ventilseite 25 des Hydraulikblocks 20 ab.

Der Hydraulikblock 20 des Bremsaggregats 3 ist entsprechend dem in Figur 1 gezeigten hydraulischen Schaltplan verbohrt. Mit "Verbohrt" beziehungsweise "Verbohrung" sind die in dem Hydraulikblock 20 angebrachten Zylinderbohrungen, Aufnahmen für die Magnetventile und Anschlüsse sowie die sie entsprechend dem hydraulischen Schaltplan verbindende, Leitungen bildenden Bohrungen gemeint. Der Hydraulikblock 20 ist kartesisch verbohrt, das heißt die Bohrungen, Aufnahmen, Anschlüsse, Leitungen usw. sind parallel und senkrecht zueinander und zu Seiten und Kanten des Hydraulikblocks 20 im Hydraulikblock 20 angebracht. Das schließt einzelne, schräg verlaufende Leitungen und Bohrungen nicht aus.

Es sind zwei Anschlüsse 2' für zu zwei Radbremsen 2 führende Bremsleitungen entlang der der Befestigungsseite 29 gegenüberliegenden Schmalseite 31 in der Motorseite 24 und zwei Anschlüsse 2' für zu zwei Radbremsen 2 führende Bremsleitungen nahe der Unterseite 28 des Hydraulikblocks 20 in der Motorseite 24 angebracht. "Nahe" bedeutet einen Abstand von nicht mehr als einem Radius des jeweiligen Anschlusses.

Zwischen der Fremdkraftzylinderbohrung 8' und der Oberseite 26 sind drei von der Motorseite 24 zu der Ventilseite 25 durchgehende Durchgangslöcher als Motoranschlussbohrungen 32 zu einer Stromversorgung des Elektromotors 6 des Fremdkraft-Bremsdruckerzeugers 9 im Hydraulikblock 20 angebracht. Die Motoranschlussbohrungen 32 sind auf einem gedachten Bogen um die Fremdkraftzylinderbohrung 8' herum zwischen der Fremdkraftzylinderbohrung 8' und der Oberseite 26 im Hydraulikblock 20 angebracht. Ebenfalls auf dem gedachten Bogen, auf dem die Motoranschlussbohrungen 32 angebracht sind, ist eine Signalbohrung 33 für Steuerleitungen und/oder Signalleitungen zu oder von dem Elektromotor 6 in dem Hydraulikblock 20 angebracht.

Die erste Rückleitung 22, die als Bohrung im Hydraulikblock 20 ausgeführt ist und die zwei der Aufnahmen 14' für die Auslassventile 14 von zwei Radbremsen 2 um den Kolben 5 der Kolben-Zylinder-Einheit 4 des Fremdkraft-Bremsdruckerzeugers 9 herum mit einem der Anschlüsse 27' für eine der Kammern 11' des Bremsflüssigkeitsbehälters 11 verbindet, ist in Figur 3 mit Strichlinien dargestellt. Ausgehend von dem Anschluss 27' für die Kammer 11' des Bremsflüssigkeitsbehälters 11 führt die erste Rückleitung 22 zunächst als Schrägbohrung von einem Grund des Anschlusses 27' zur Fremdkraftzylinderbohrung 8', die den Zylinder 8 der Kolben-Zylinder-Einheit 4 des Fremdkraft-Bremsdruckerzeugers 9 bildet. Von der Fremdkraftzylinderbohrung 8'verläuft die erste Rückleitung 22 parallel in Richtung der Befestigungsseite 29 versetzt weiter nach unten zwischen den beiden Aufnahmen 14' für die beiden Auslassventile 14 hindurch zur Unterseite 28 des Hydraulikblocks 20. Durch Querbohrungen, die an der Befestigungsseite 29 des Hydraulikblocks 20 münden (nicht dargestellt), sind die beiden Aufnahmen 14' mit der ersten Rückleitung 22 verbunden. "Schrägbohrung" bedeutet, dass der Abschnitt der ersten Rückleitung 22 von dem Anschluss 27' für den Bremsflüssigkeitsspeicher 11 schräg zur Motorseite 24 und zur Ventilseite 25 und - im Ausführungsbeispiel parallel zur Befestigungsseite 29 und zur Schmalseite 31 - zur Fremdkraftzylinderbohrung 8' führt. Bis auf den Abschnitt vom Anschluss 27' zur Fremdkraftzylinderbohrung 8' verläuft die erste Rückleitung 22 wie alle anderen Bohrungen parallel zu den Seiten 24, 25, 26, 28, 29, 31 und Kanten des Hydraulikblocks 20. Der Abschnitt der ersten Rückleitung 22, der von dem Anschluss 27' für den Bremsflüssigkeitsbehälter 11 kommt und ebenso der Abschnitt der ersten Rückleitung 22, der zu den Aufnahmen 14' für die Auslassventile 14 führt, münden in eine Nut 34 in der Fremdkraftzylinderbohrung 8', die sich einer Radialebene der Fremdkraftzylinderbohrung 8' befindet, in der sich der Kolben 5 der Kolben-Zylinder-Einheit 4 des Fremdkraft-Bremsdruckerzeugers 9 befindet, wenn er montiert ist. Die erste Rückleitung 22 ist auf diese Weise um den Kolben 5 der Kolben-Zylinder-Einheit 4 des Fremdkraft-Bremsdruckerzeugers 9 herum geführt, ohne mit dem Zylinder 8 der Kolben-Zylinder-Einheit 4 des Fremdkraft-Bremsdruckerzeugers 9 zu kommunizieren. Die Nut 34 in der Fremdkraftzylinderbohrung 8' ist in Figur 3 mit Strichlinien gezeichnet.

Die zweite Rückleitung 23 ist ebenfalls mit Strichlinien in Figur 3 dargestellt. Sie führt von den beiden anderen Aufnahmen 14' für die Auslassventile 14 von zwei Radbremsen 2 nach oben zur Zylinderbohrung 18' des Pedalwegsimulators 18 und von dort parallel in Richtung der Schmalseite 31 des Hydraulikblocks 20 versetzt weiter nach oben bis zu einem anderen Anschluss 27" einer Kammer 11" des Bremsflüssigkeitsbehälters 11 als die erste Rückleitung 22.

Zwischen der Zylinderbohrung 18' des Pedalwegsimulators 18 und dem Anschluss 27" der Kammer 11" des Bremsflüssigkeitsbehälters 11 verläuft die zweite Rückleitung 23 zwar parallel zur Befestigungsseite 28 und zu der ihr gegenüberliegenden Schmalseite 31 des Hydraulikblocks 20 allerdings schräg zur Motorseite 24 und zur Ventilseite 25 des Hydraulikblocks 20. Der schräge Verlauf der zweiten Rückleitung 23 ist in Figur 3a zu sehen. Die Schnittebene der Figur 3a weist einen Versatz radial zur Zylinderbohrung 18' des Pedalwegsimulators 18 in Richtung der Befestigungsseite 29 beziehungsweise in Richtung der der Befestigungsseite 29 gegenüberliegenden Schmalseite 31 des Hydraulikblocks 20 auf. Der Versatz der Schnittebene der Figur 3a ist in Figur 3 mit der Schnittlinie A-A eingezeichnet. Der zwischen der Zylinderbohrung 18' des Pedalwegsimulators 18 und dem Anschluss 27" der Kammer 11" des Bremsflüssigkeitsbehälters 11 schräg zur Motorseite 24 und zur Ventilseite 25 des Hydraulikblocks 20 verlaufende Abschnitt der zweiten Rückleitung 23 ist in Figur 3a in die Schnittebene versetzt gezeichnet. Tatsächlich weist der schräge Abschnitt der zweiten Rückleitung 23 einen Radialversatz zum Anschluss 27" der Kammer 11" des Bremsflüssigkeitsbehälters 11 auf, der in Figur 3 zu sehen ist.

Eine Querbohrung 37 verbindet die beiden Aufnahmen 14' für die Auslassventile 14 miteinander.

Die zweite Rückleitung 23 mündet in die Hauptbremszylinderbohrung 15', so dass auch eine der Kammern des Zweikreis-Hauptbremszylinders 15 durch die Zylinderbohrung 18' des Pedalwegsimulators 18 mit einer der Kammern 11" des Bremsflüssigkeitsbehälters 11 verbunden ist. Die zweite Rückleitung 23 mündet in einer Radialebene der Zylinderbohrung 18' des Pedalwegsimulators 18, die sich auf einer Rückseite des Kolbens des Pedalwegsimulators 18 befindet und die durch ihren Anschluss an den Bremsflüssigkeitsbehälter 11 drucklos ist.

Die zweite Rückleitung 23 ist von der Unterseite 28 aus in den Hydraulikblock 20 gebohrt und durchsetzt die Hauptbremszylinderbohrung 15' radial, damit ein Bohrer beim Bohren der zweiten Rückleitung 23 beim Austritt aus der Hauptbremszylinderbohrung 15' senkrecht und nicht schräg auf eine Zylinderwand der Hauptbremszylinderbohrung 15' trifft. Dadurch erfährt der Bohrer beim Austritt aus der Hauptbremszylinderbohrung 15' keinen Versatz tangential zur Hauptbremszylinderbohrung 15' und bricht nicht ab. Die Hauptbremszylinderbohrung 15' weist eine umlaufende Nut 41 auf, in die die zweite Rückleitung 23 radial an zwei einander diametral gegenüberliegenden Stellen mündet.

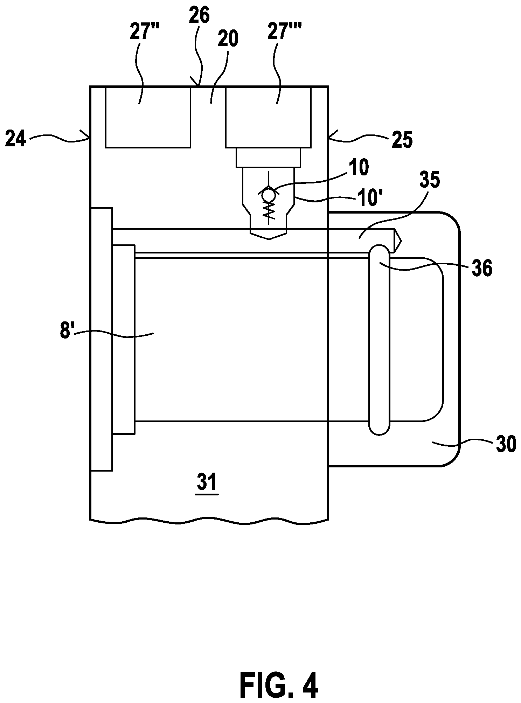

Figur 4 zeigt ein Bruchstück des Hydraulikblocks 20 mit Blick auf die der Befestigungsseite 29 gegenüberliegenden Schmalseite 31. Der die Fremdkraftzylinderbohrung 8' verlängernde Dom 30, der von der Ventilseite 25 des Hydraulikblocks 20 absteht, ist zu sehen. Die Fremdkraftzylinderbohrung 8' ist ebenso wie die Anschlüsse 27", 27‴ des Bremsflüssigkeitsbehälters 11 mit Volllinien eingezeichnet. Eine als Bohrung im Hydraulikblock 20 ausgeführte Bremsleitung, die koaxial in einen der Anschlüsse 27‴ mündet, verläuft nach einer Abwinklung parallel zur Fremdkraftzylinderbohrung 8' in einer Wandung des Doms 30 außerhalb der Fremdkraftzylinderbohrung 8' und mündet in eine umlaufende Nut 36, die die Fremdkraftzylinderbohrung 8' im Dom 30 umschließt.

Der Anschluss 27‴ für den Bremsflüssigkeitsbehälter 11 weist eine ihn verlängernde Senkung 10' als Aufnahme für das Rückschlagventil 10 in der zur Fremdkraftzylinderbohrung 8' führenden Bremsleitung 35 auf. Das Rückschlagventil 10 ist in Figur 4 als Schaltzeichen dargestellt.

Um den Hauptbremszylinder 15 entlüften, das heißt Luftblasen aus Bremsflüssigkeit im Hauptbremszylinder 15 entfernen zu können, mündet eine Bremsleitung 43, die die Hauptbremszylinderbohrung 15' mit einer der Aufnahmen 16' für die beiden Trennventile 16 verbindet, tangential an einer der Oberseite 26 des Hydraulikblocks 20 zugewandten Umfangsstelle in die Hauptbremszylinderbohrung 15' (Figur 3b). In Figur 3 ist rechts nahe der Mündung der Fremdkraftzylinderbohrung 15' an der Befestigungsseite 29 des Hydraulikblocks 20 die zu der der Oberseite 26 des Hydraulikblocks 20 tangentiale Anordnung einer der Aufnahmen 16' für ein Trennventil 16 zu sehen.

## Patentansprüche

1. Hydraulikblock für ein Bremsaggregat einer hydraulischen Fremdkraftbremsanlage für einen Kraftwagen, wobei der Hydraulikblock (20) eine Oberseite (26), die zu einem Aufsetzen eines Bremsflüssigkeitsbehälters (11) vorgesehen ist und die Anschlüsse (27', 27", 27‴) für den Bremsflüssigkeitsbehälter (11) aufweist, eine an die Oberseite (26) angrenzende Befestigungsseite (29), die zu einer Befestigung des Hydraulikblocks (20) an einer Spritzwand des Kraftwagens ausgebildet ist und an der eine Hauptbremszylinderbohrung (15') mündet, eine an die Oberseite (26) und an die Befestigungsseite (29) angrenzende Motorseite (24), an der eine Fremdkraftzylinderbohrung (8') mündet und an der ein Elektromotor (6) zu einer Verschiebung eines Fremdkraftkolbens (5) eines Fremdkraft-Bremsdruckerzeugers (9) in der Fremdkraftzylinderbohrung (8') anordenbar ist, Anschlüsse (2') für hydraulische Radbremsen (2) und eine Simulatorzylinderbohrung (18') für einen Pedalwegsimulator (18) der Fremdkraft-Bremsanlage (1) aufweist, **dadurch gekennzeichnet, dass** die Fremdkraftzylinderbohrung (8') und die Simulatorzylinderbohrung (18') zwischen der Oberseite (26) und der Hauptbremszylinderbohrung (15') im Hydraulikblock (20) angebracht sind, und dass eine zweite Rückleitung (23) in dem Hydraulikblock (20) von einer Aufnahme (14') für ein Auslassventil (14) durch die Simulatorzylinderbohrung (18') zu einem der Anschlüsse (27") für den Bremsflüssigkeitsbehälter (11) führt.

2. Hydraulikblock nach Anspruch 1, **dadurch gekennzeichnet, dass** die zweite Rückleitung (23) von der Aufnahme (14') für das Auslassventil (14) zu der Hauptbremszylinderbohrung (15') und von der Simulatorzylinderbohrung (18') schräg zur Motorseite (24) zu dem Anschluss (27") für den Bremsflüssigkeitsbehälter (11) führt.

3. Hydraulikblock nach Anspruch 1 oder 2, **dadurch gekennzeichnet, dass** die zweite Rückleitung (23) die Hauptbremszylinderbohrung (15') radial durchsetzt.

4. Hydraulikblock nach einem oder mehreren der Ansprüche 1 bis 3, **dadurch gekennzeichnet, dass** eine erste Rückleitung (22) in dem Hydraulikblock (20) von einer Aufnahme (14') für ein Auslassventil (14) zu der Fremdkraftzylinderbohrung (8') und von der Fremdkraftzylinderbohrung (8') zu einem der Anschlüsse (27') für den Bremsflüssigkeitsbehälter (11) führt.

5. Hydraulikblock nach Anspruch 4, **dadurch gekennzeichnet, dass** ein von der Aufnahme (14') für das Auslassventil (14) kommender Abschnitt der ersten Rückleitung (22) an einer anderen Umfangsstelle in eine Nut (34) in der Fremdkraftzylinderbohrung (8') mündet als ein zu dem Anschluss (27') führender Abschnitt der ersten Rückleitung (22).

6. Hydraulikblock nach einem oder mehreren der vorhergehenden Ansprüche, **dadurch gekennzeichnet, dass** der Hydraulikblock (20) einen von einer der Motorseite (24) gegenüberliegenden Ventilseite (25) abstehenden Dom (30) aufweist, in den sich die Fremdkraftzylinderbohrung (8') erstreckt, und dass ein Abschnitt einer Bremsleitung (35), die im Hydraulikblock (20) von einem der Anschlüsse (27‴) für den Bremsflüssigkeitsbehälter (11) in der Oberseite (26) des Hydraulikblocks (20) zu der Fremdkraftzylinderbohrung (8') führt, durch eine Zylinderwand des Doms (30) verläuft.

7. Hydraulikblock nach einem oder mehreren der vorhergehenden Ansprüche, **dadurch gekennzeichnet, dass** der Hydraulikblock (20) Aufnahmen (12', 13', 14', 16', 19') für Ventile (12, 13, 14, 16, 19) einer Bremsdruckregelung der Fremdkraft-Bremsanlage (1) in einer der Motorseite (24) gegenüberliegenden Ventilseite (25) des Hydraulikblocks (20) aufweist.

8. Hydraulikblock nach einem oder mehreren der vorhergehenden Ansprüche, **dadurch gekennzeichnet, dass** die Anschlüsse (2') für die Radbremsen (2) in der Motorseite (24) des Hydraulikblocks (20) angeordnet sind.

9. Hydraulikblock nach einem oder mehreren der vorhergehenden Ansprüche, **dadurch gekennzeichnet, dass** eine im Hydraulikblock (20) von der Hauptbremszylinderbohrung (15') zu einer Aufnahme (16') für ein Trennventil (16) führende Bremsleitung (43) an einer der Oberseite (26) des Hydraulikblocks (20) zugewandten Umfangsstelle in die Hauptbremszylinderbohrung (15') mündet.

10. Hydraulikblock nach einem oder mehreren der vorhergehenden Ansprüche, **dadurch gekennzeichnet, dass** einer der Anschlüsse (27‴) für den Bremsflüssigkeitsvorratsbehälter (11) in der Oberseite (26) des Hydraulikblocks (20) eine konzentrische Aufnahme (10') für ein Rückschlagventil (10) aufweist, von der eine Bremsleitung (35) in dem Hydraulikblock (20) zu der Fremdkraftzylinderbohrung (8') führt.

11. Hydraulikblock nach einem oder mehreren der vorhergehenden Ansprüche, **dadurch gekennzeichnet, dass** Motoranschlussbohrungen (32) zu einer Stromversorgung des Elektromotors (6) des Fremdkraft-Bremsdruckerzeugers (9) und eine Signalbohrung (33) für Steuerleitungen und/oder Signalleitungen zu oder von dem Elektromotor (6) den Hydraulikblock (20) von der Motorseite (24) zur Ventilseite (25) durchsetzend auf einem gedachten Bogen um die Fremdkraftzylinderbohrung (8') herum in dem Hydraulikblock (20) angebracht sind.

## Claims

1. Hydraulic block for a brake assembly of a hydraulic external-force brake installation for a motor vehicle, wherein the hydraulic block (20) has a top side (26), which is intended for mounting of a brake fluid vessel (11) and has connections (27', 27", 27‴) for the brake fluid vessel (11), a fastening side (29), which adjoins the top side (26) and is configured for fastening of the hydraulic block (20) to a bulkhead of the motor vehicle and at which a master brake cylinder bore (15') opens out, a motor side (24), which adjoins the top side (26) and the fastening side (29) and at which an external-force cylinder bore (8') opens out and on which there is able to be arranged an electric motor (6) for displacement of an external-force piston (5) of an external-force brake pressure generator (9) in the external-force cylinder bore (8'), connections (2') for hydraulic wheel brakes (2) and a simulator cylinder bore (18') for a pedal travel simulator (18) of the external-force brake installation (1), **characterized in that** the external-force cylinder bore (8') and the simulator cylinder bore (18') are provided in the hydraulic block (20) between the top side (26) and the master brake cylinder bore (15'), and **in that** a second return line (23) leads in the hydraulic block (20) from a receptacle (14') for an outlet valve (14) through the simulator cylinder bore (18') to one of the connections (27") for the brake fluid vessel (11).

2. Hydraulic block according to Claim 1, **characterized in that** the second return line (23) leads from the receptacle (14') for the outlet valve (14) to the master brake cylinder bore (15'), and from the simulator cylinder bore (18') to the connection (27") for the brake fluid vessel (11) at an angle to the motor side (24).

3. Hydraulic block according to Claim 1 or 2, **characterized in that** the second return line (23) radially extends through the master brake cylinder bore (15').

4. Hydraulic block according to one or more of Claims 1 to 3, **characterized in that** a first return line (22) leads in the hydraulic block (20) from a receptacle (14') for an outlet valve (14) to the external-force cylinder bore (8') and from the external-force cylinder bore (8') to one of the connections (27') for the brake fluid vessel (11).

5. Hydraulic block according to Claim 4, **characterized in that** a portion of the first return line (22) coming from the receptacle (14') for the outlet valve (14) opens out into a groove (34) in the external-force cylinder bore (8') at a different circumferential point than a portion of the first return line (22) leading to the connection (27').

6. Hydraulic block according to one or more of the preceding claims, **characterized in that** the hydraulic block (20) has a dome (30) which protrudes from a valve side (25) situated opposite the motor side (24) and into which the external-force cylinder bore (8') extends, and **in that** a portion of a brake line (35) leading in the hydraulic block (20) from one of the connections (27‴) for the brake fluid vessel (11) in the top side (26) of the hydraulic block (20) to the external-force cylinder bore (8') runs through a cylinder wall of the dome (30).

7. Hydraulic block according to one or more of the preceding claims, **characterized in that** the hydraulic block (20) has receptacles (12', 13', 14', 16', 19') for valves (12, 13, 14, 16, 19) of a brake pressure control system of the external-force brake installation (1) in a valve side (25), situated opposite the motor side (24), of the hydraulic block (20).

8. Hydraulic block according to one or more of the preceding claims, **characterized in that** the connections (2') for the wheel brakes (2) are arranged in the motor side (24) of the hydraulic block (20).

9. Hydraulic block according to one or more of the preceding claims, **characterized in that** a brake line (43) leading in the hydraulic block (20) from the master brake cylinder bore (15') to a receptacle (16') for an isolation valve (16) opens out into the master brake cylinder bore (15') at a circumferential point which is directed towards the top side (26) of the hydraulic block (20).

10. Hydraulic block according to one or more of the preceding claims, **characterized in that** one of the connections (27‴) for the brake fluid vessel (11) in the top side (26) of the hydraulic block (20) has a concentric receptacle (10') for a check valve (10), from which a brake line (35) leads in the hydraulic block (20) to the external-force cylinder bore (8').

11. Hydraulic block according to one or more of the preceding claims, **characterized in that** motor connection bores (32) for supply of power to the electric motor (6) of the external-force brake pressure generator (9) and a signal bore (33) for control lines and/or signal lines to or from the electric motor (6) are provided in the hydraulic block (20) on an imaginary arc around the external-force cylinder bore (8') such that they extend through the hydraulic block (20) from the motor side (24) to the valve side (25).

## Revendications

1. Bloc hydraulique pour un groupe de freinage d'un système de freinage hydraulique à force externe pour un véhicule automobile, le bloc hydraulique (20) présentant un côté supérieur (26) qui est prévu pour une mise en place d'un réservoir de liquide de freinage (11) et qui présente les raccords (27', 27", 27"') pour le réservoir de liquide de freinage (11), un côté de fixation (29) adjacent au côté supérieur (26), qui est configuré pour une fixation du bloc hydraulique (20) sur un tablier du véhicule automobile et sur lequel débouche un alésage de maître-cylindre de frein (15'), un côté moteur (24) adjacent au côté supérieur (26) et au côté de fixation (29), sur lequel débouche un alésage de cylindre à force externe (8') et sur lequel peut être agencé un moteur électrique (6) pour un déplacement d'un piston à force externe (5) d'un générateur de pression de freinage à force externe (9) dans l'alésage de cylindre à force externe (8'), des raccords (2') pour des freins de roue hydrauliques (2) et un alésage de cylindre de simulateur (18') pour un simulateur de course de pédale (18) du système de freinage à force externe (1), **caractérisé en ce que** l'alésage de cylindre à force externe (8') et l'alésage de cylindre de simulateur (18') sont montés entre le côté supérieur (26) et l'alésage de maître-cylindre de frein (15') dans le bloc hydraulique (20), et **en ce qu'**une deuxième conduite de retour (23) dans le bloc hydraulique (20) mène d'un logement (14') pour une soupape d'échappement (14) à travers l'alésage de cylindre de simulateur (18') à l'un des raccords (27") pour le réservoir de liquide de freinage (11).

2. Bloc hydraulique selon la revendication 1, **caractérisé en ce que** la deuxième conduite de retour (23) mène du logement (14') pour la soupape d'échappement (14) à l'alésage de maître-cylindre de frein (15') et de l'alésage de cylindre de simulateur (18') en biais vers le côté moteur (24) au raccord (27") pour le réservoir de liquide de freinage (11).

3. Bloc hydraulique selon la revendication 1 ou 2, **caractérisé en ce que** la deuxième conduite de retour (23) traverse radialement l'alésage de maître-cylindre de frein (15').

4. Bloc hydraulique selon une ou plusieurs des revendications 1 à 3, **caractérisé en ce qu'**une première conduite de retour (22) dans le bloc hydraulique (20) mène d'un logement (14') pour une soupape d'échappement (14) à l'alésage de cylindre à force externe (8') et de l'alésage de cylindre à force externe (8') à l'un des raccords (27') pour le réservoir de liquide de freinage (11).

5. Bloc hydraulique selon la revendication 4, **caractérisé en ce qu'**une section de la première conduite de retour (22) provenant du logement (14') pour la soupape d'échappement (14) débouche dans une rainure (34) dans l'alésage de cylindre à force externe (8') en un point périphérique différent de celui d'une section de la première conduite de retour (22) menant au raccord (27').

6. Bloc hydraulique selon une ou plusieurs des revendications précédentes, **caractérisé en ce que** le bloc hydraulique (20) présente un dôme (30) faisant saillie d'un côté de soupape (25) opposé au côté moteur (24), dans lequel s'étend l'alésage de cylindre à force externe (8'), et **en ce qu'**une section d'une conduite de frein (35), qui mène dans le bloc hydraulique (20) depuis l'un des raccords (27"') pour le réservoir de liquide de freinage (11) dans le côté supérieur (26) du bloc hydraulique (20) jusqu'à l'alésage de cylindre à force externe (8'), s'étend à travers une paroi cylindrique du dôme (30).

7. Bloc hydraulique selon une ou plusieurs des revendications précédentes, **caractérisé en ce que** le bloc hydraulique (20) présente des logements (12', 13', 14', 16', 19') pour des soupapes (12, 13, 14, 16, 19) d'une régulation de pression de freinage du système de freinage à force externe (1) dans un côté de soupape (25) du bloc hydraulique (20) opposé au côté moteur (24).

8. Bloc hydraulique selon une ou plusieurs des revendications précédentes, **caractérisé en ce que** les raccords (2') pour les freins de roue (2) sont agencés dans le côté moteur (24) du bloc hydraulique (20).

9. Bloc hydraulique selon une ou plusieurs des revendications précédentes, **caractérisé en ce qu'**une conduite de frein (43) menant dans le bloc hydraulique (20) de l'alésage de maître-cylindre de frein (15') à un logement (16') pour une soupape de séparation (16) débouche dans l'alésage de maître-cylindre de frein (15') en un point périphérique tourné vers le côté supérieur (26) du bloc hydraulique (20).

10. Bloc hydraulique selon une ou plusieurs des revendications précédentes, **caractérisé en ce que** l'un des raccords (27"') pour le réservoir de liquide de freinage (11) dans le côté supérieur (26) du bloc hydraulique (20) présente un logement concentrique (10') pour un clapet anti-retour (10), à partir duquel une conduite de frein (35) dans le bloc hydraulique (20) mène à l'alésage de cylindre à force externe (8').

11. Bloc hydraulique selon une ou plusieurs des revendications précédentes, **caractérisé en ce que** des alésages de raccordement de moteur (32) pour une alimentation en courant du moteur électrique (6) du générateur de pression de freinage à force externe (9) et un alésage de signalisation (33) pour des lignes de commande et/ou des lignes de signalisation vers ou depuis le moteur électrique (6) sont montés dans le bloc hydraulique (20) en traversant le bloc hydraulique (20) depuis le côté moteur (24) vers le côté soupape (25) sur un arc imaginaire autour de l'alésage de cylindre à force externe (8').
